# EUROPEAN PATENT SPECIFICATION

(11) **EP 0 382 316 B1**
(45) Date of publication and mention of the grant of the patent: **15.12.1993**
(21) Application number: 90200280.7
(22) Date of filing: 07.02.1990
(51) Int. Cl.: B01D 3/10

(54) **Vacuum distillation process**
Verfahren zur Vakuumdestillation
Procédé de distillation à vide

(30) Priority: 10.02.1989 GB 8903013
(43) Date of publication of application: 16.08.1990
(73) Proprietor: SHELL INTERNATIONALE RESEARCH MAATSCHAPPIJ B.V., 2596 HR Den Haag (NL)
(72) Inventor: Hamer, Johannes Albertus, NL-2596 HR The Hague (NL); Van Der Heijden, Pieter, NL-2596 HR The Hague (NL)

(56) References cited:
- DE-A- 2 855 258
- DE-B- 1 052 359
- DE-B- 1 258 358
- US-A- 2 664 391
- US-A- 3 749 647
- US-A- 4 568 428

## Description

The present invention relates to a vacuum distillation process for distilling a feed containing hydrocarbons, which feed has a temperature in the range of from 380 to 425 °C, at a subatmospheric pressure in the range of from 650 to 5 200 Pa. The feed is sometimes referred to as long residue.

Such a vacuum distillation process comprises introducing a feed which contains vapour and liquid into a distillation column operating at a subatmospheric pressure, allowing vapour to rise inside the distillation column, allowing liquid to drop to the bottom part of the distillation column, collecting liquid in a collecting vessel in the bottom part of the distillation column, removing liquid from the collecting vessel, cooling the liquid removed from the collecting vessel and introducing part of the cooled liquid into the liquid present in the collecting vessel.

The amount of liquid removed from the collecting vessel is such that a predetermined amount of liquid is maintained in the collecting vessel, wherein the liquid present in the collecting vessel acts as a seal. As a result gas cannot enter from the distillation column into the suction side of the pump which is used to remove liquid from the collecting vessel. In this way the pump is protected from damage, for example damage which is associated with cavitation.

Liquid present in the collecting vessel is cooled to prevent excessive cracking of the hydrocarbons so as to reduce the amount of gaseous hydrocarbons and consequently to further reduce cavitation in the pump which removes liquid from the collecting vessel.

It was found, however, that mixing in the collecting vessel is incomplete. As a result excessive cracking of the liquid in the collecting vessel is not prevented but is continuing. As there is a tendency to supply feed at higher feed inlet temperatures the temperature of the liquid is higher as well and thus cracking is even more pronounced. The higher feed inlet temperatures are made possible by employing the vacuum distillation device as described in British patent application No. 89 03 007.6 filed on 10th February, 1989.

USA patent specification US-A-2 664 391 discloses a vacuum distillation process comprising introducing a feed which contains vapour and liquid a distillation column operating at a subatmospheric pressure, allowing vapour to rise inside the distillation column, allowing liquid to drop to the bottom part of the distillation column, and removing liquid from the bottom part of the distillation column.

In the prior art process liquid from the bottom part is cooled in a cooler, part of the cooled liquid is supplied to an external collecting vessel, and cooled liquid from the external collecting vessel is returned to the liquid removed from the bottom part of the distillation column.

In this way only a relatively small amount of liquid is circulated through the external collecting vessel and this adversely affects control of the liquid level in the external collecting vessel.

It is an object of the present invention a vacuum distillation process in which control of the liquid level in the external collecting vessel is improved.

To this end the vacuum distillation process according to the present invention is characterized in that it further comprises passing liquid from the bottom part through a transfer conduit to an external collecting vessel, removing liquid from the collecting vessel, cooling liquid removed from the collecting vessel, and introducing part of the cooled liquid into the liquid passing through the transfer conduit.

In this way a good heat-exchange is obtained even if the amount of cooled liquid introduced in the liquid passing through the transfer conduit is small compared to the amount of liquid present in the collecting vessel.

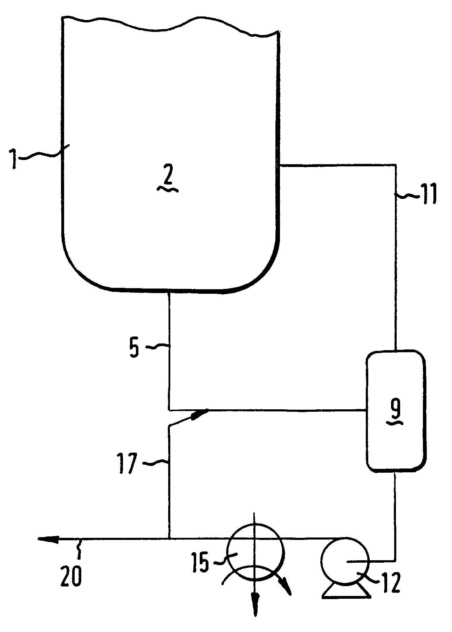

The invention will now be described by way of example in more detail with reference to the accompanying figure showing schematically a longitudinal section of the lower part of distillation column 1 including a bottom section 2. Please note that the distillation column 1 further includes an inlet section into which a feed inlet debouches and a top section which are not shown in the figure.

During normal operation heated feed comprising vapour and liquid is passed through the feed inlet into the inlet section of the distillation column 1, while the pressure in the distillation column 1 is maintained at a subatmospheric level.

Vapour rises inside the distillation column 1 to the top section (not shown) from which the vapour is withdrawn by means of a vacuum pump such as a steam ejector (not shown).

Liquid drops downwards and is passed from the bottom section 2 through transfer conduit 5 to the collecting vessel 9 in which a predetermined amount of liquid is stored. To equalize the pressure in the gas space of the collecting vessel 9 and the pressure in the gas-filled lower part of the distillation column 1 gas is allowed to flow through connecting line 11.

To maintain the liquid level at a predetermined level, liquid is removed from the collecting vessel 9 by means of pump 12. The removed liquid is cooled in cooler 15.

The liquid which is supplied to the collecting vessel 9 is cooled in the following way. Between 30 and 70% by volume of the cooled liquid is supplied through conduit 17 to transfer conduit 5. The cooled liquid is mixed in the transfer conduit 5 with the liquid passing theretrough. The cooled liquid is introduced into transfer conduit 5 at a sharp angle with the direction of fluid flow through transfer conduit 5. The location at which the cooled liquid is introduced is close to the distillation column 1.

The balance of the cooled liquid, which is sometimes referred to as short residue, is withdrawn through conduit 20 for further use as for example fuel.

The improved cooling reduces cracking of the short residue. A further advantage is that cooled liquid flows through pump 12 so that cavitation is suppressed, this increases the life of the pump.

## Claims

1. Vacuum distillation process comprising introducing a feed which contains vapour and liquid into a distillation column (1) operating at a subatmospheric pressure, allowing vapour to rise inside the distillation column (1), allowing liquid to drop to the bottom part (2) of the distillation column (1), and removing liquid from the bottom part (2) of the distillation column (1),
characterized in that the process further comprises passing liquid from the bottom part (2) through a transfer conduit (5) to an external collecting vessel (9), removing liquid from the collecting vessel (9), cooling (15) liquid removed from the collecting vessel (9), and introducing (17) part of the cooled liquid into the liquid passing through the transfer conduit (5).

2. Vacuum distillation process as claimed in claim 1, wherein the fraction of the cooled liquid (17) which is introduced into the transfer conduit (5) is between 30 and 70% by volume of the cooled liquid.

## Patentansprüche

1. Vakuumdestillationsverfahren, umfassend das Einführen einer Zuspeisung, die Dampf und Flüssigkeit enthält, in eine Destillationssäule (1), die bei unteratmosphärischem Druck arbeitet, und welche es ermöglicht, daß Dampf innerhalb der Destillationssäule (1) nach oben steigt, daß Flüssigkeit zum Bodenteil (2) der Destillationssäule (1) tropft und Flüssigkeit vom Bodenteil (2) der Destillationssäule (1) abgezogen wird,
**dadurch gekennzeichnet**,
daß das Verfahren ferner die Maßnahmen des Leitens von Flüssigkeit vom Bodenteil (2) durch die Übertragungsleitung (5) zu einem äußeren Sammelbehälter (9), das Abziehen von Flüssigkeit aus dem Sammelbehälter (9), das Kühlen (15) der aus dem Sammelbehälter (9) abgezogenen Flüssigkeit und das Einspeisen (17) eines Teils der gekühlten Flüssigkeit in die durch die Übertragungsleitung (5) geleitete Flüssigkeit umfaßt.

2. Vakuumdestillationsverfahren wie in Anspruch 1 beansprucht, in welchem der Anteil der gekühlten Flüssigkeit (17), welcher in die Übertragungsleitung (5) eingeführt wird, zwischen 30 und 70 Vol.% der gekühlten Flüssigkeit beträgt.

## Revendications

1. Procédé de distillation sous vide, consistant à introduire une charge qui contient de la vapeur et du liquide dans une colonne de distillation (1) fonctionnant à une pression inférieure à celle de l'atmosphère, à laisser la vapeur monter à l'intérieur de la colonne de distillation (1), à laisser le liquide tomber dans le fond (2) de la colonne de distillation (1) et à évacuer le liquide du fond (2) de la colonne de distillation (1), caractérisé en ce que le procédé consiste par ailleurs à faire passer le liquide du fond (2) par un conduit de transfert (5) dans une cuve collectrice extérieure (9), à évacuer du liquide de la cuve collectrice (9), à refroidir (15) le liquide évacué de la cuve collectrice (9) et à introduire (17) une partie du liquide refroidi dans le liquide passant par le conduit de transfert (5).

2. Procédé de distillation sous vide selon la revendication 1, suivant lequel la fraction du liquide refroidi (17) qui est introduite dans le conduit de transfert (5) est comprise entre 30 et 70 % en volume du liquide refroidi.
